# EUROPEAN PATENT APPLICATION

(11) **EP 2 902 893 A1**
(43) Date of publication of application: **05.08.2015**
(21) Application number: 12885426.2
(22) Date of filing: 26.09.2012
(51) Int. Cl.: G06F 3/048

(54) **INFORMATION PROCESSING DEVICE, DISPLAY CONTROL METHOD, AND RECORDING MEDIUM**

(71) Applicant: NEC Corporation, Tokyo 108-8001 (JP)
(72) Inventor: YAMAZAKI Masahiro, Tokyo 100-8220 (JP); URAWAKI Koji, Tokyo 100-8220 (JP)
(74) Representative: Vossius & Partner Patentanwälte Rechtsanwälte mbB
(86) International application number: PCT/JP2012/074793
(87) International publication number: WO 2014/049753

(57) **Abstract**

An information processing device includes: a display and input unit (5) that displays characters; an operation unit (8) that designates the size of characters to be displayed on the display and input unit (5); and a control unit (2) that causes the display and input unit (5) to display the characters in a display object document in a manner such that, when the character size designated by the operation unit (8) is smaller than a predetermined size, characters in a character string that falls under a predefined rule are displayed in the predetermined size and the other characters are displayed in the size designated by a character size designation unit.

## Description

### [Technical Field]

The present invention relates to an information processing device that includes a display unit, a display control method and a recording medium.

### [Background Art]

PTL 1 discloses a device that processes a document into a document in which specific characters are emphasized. This device, depending on the characters in the document, emphasizes specific characters by differentiating the font, contrast and other factors of the characters from those of the other characters.

### [Citation List]

### [Patent Literature]

[PTL 1] Japanese Unexamined Patent Application Publication No. 2010-157085

### [Summary of Invention]

### [Technical Problem]

Display devices can change the size of characters displayed thereon. Reducing the size of characters of a displayed document increases the amount of information that can be displayed at a time. However, since the size of the characters becomes smaller, visibility is lowered. On the other hand, while enlarging the size of displayed characters increases visibility of each character, it decreases the amount of information that can be displayed at a time. These problems are not solved by the technique described in PTL 1.

The present invention is made in consideration of the above issues. The objective of the present invention is to increase the amount of information that can be displayed at a time without harming visibility.

### [Solution to Problem]

To achieve the above objective, the information processing device according to the present invention includes: a display unit that displays characters; a character size designation unit that designates a size of the characters to be displayed on the display unit; and a display control unit that causes the display unit to display the characters in a display object document in a manner such that, when the size designated by the character size designation unit is smaller than a predetermined size, characters in a character string that falls under a predefined rule are displayed in the predetermined size and other characters are displayed in the size designated by the character size designation unit.

To achieve the above objective, the display control method according to the present invention includes: receiving a designation for specifying a size of characters to be displayed; and causing a display unit to display the characters in a display object document in a manner such that, when the designated character size is smaller than a predetermined size, characters in a character string that falls under a predefined rule are displayed in a size larger than the specified size and other characters are displayed in the designated size.

To achieve the above objective, the computer readable recording medium according to the present invention stores a program that causes a computer to operate to: receive a designation that specifies a size of characters to be displayed; and cause a display unit to display the characters in a display object document in a manner such that, when the specified character size is smaller than a predetermined size, characters in a character string that falls under a predefined rule are displayed in a size larger than the specified size and other characters are displayed in the specified size.

### [Advantageous Effects of Invention]

According to the present invention, the amount of information that can be displayed at a time can be increased without harming visibility.

### [Brief Description of Drawings]

Fig. 1 is an outline view of an information processing device according to a first exemplary embodiment;
Fig. 2 is a block diagram of the information processing device according to the first exemplary embodiment;
Fig. 3 is a diagram illustrating the structure of an important word dictionary in the information processing device according to the first exemplary embodiment;
Fig. 4 is a flowchart of character size change processing of the information processing device according to the first exemplary embodiment;
Fig. 5 is a diagram illustrating an example of a document as a display object;
Fig. 6 is a diagram illustrating, in (a) to (c), display examples of the document illustrated in Fig. 5;
Fig. 7 is a diagram illustrating a variation of the display example of the document illustrated in Fig. 5;
Fig. 8 is a diagram illustrating another variation of the display example of the document illustrated in Fig. 5;
Fig. 9 is a diagram illustrating still another variation of the display example of the document illustrated in Fig. 5;
Fig. 10 is a diagram illustrating, in (a) and (b), screen examples that represent how the sizes of characters are changed by touch operation on the information processing device according to the first exemplary embodiment;
Fig. 11 is a diagram illustrating, in (a), a display example of a bulletin board of an information processing device according to a second exemplary embodiment, and illustrating, in (b), a display example of program information of a program selected on the bulletin board;
Fig. 12 is a block diagram of the information processing device according to the second exemplary embodiment;
Fig. 13 is a diagram illustrating the structure of a television receiving unit in the information processing device according to the second exemplary embodiment; and
Fig. 14 is a diagram illustrating a structure of a management program table.

### [Description of Embodiments]

The following will describe the information processing device, display control method, and recording medium according to the exemplary embodiments of the present invention with reference to the drawings.

### (First Exemplary Embodiment)

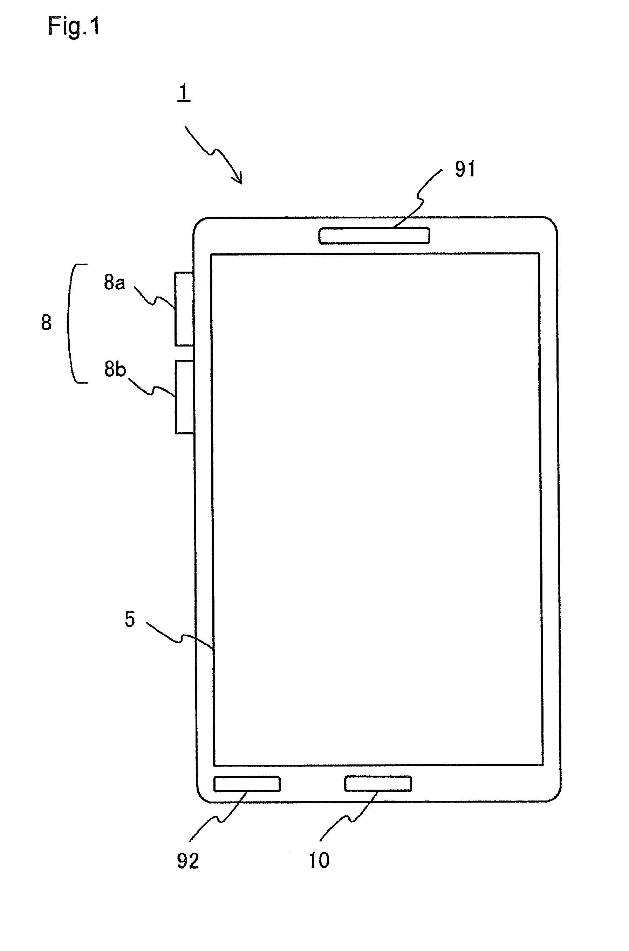

The information processing device 1 according to the first exemplary embodiment is a so-called smartphone that includes a touch panel. As illustrated in Fig. 1, the information processing device 1 includes a display and input unit 5, an operation unit 8, a voice input unit 10, a speaker for voice call 91, and a speaker 92.

The display and input unit 5 is configured by a so-called touch panel display that includes a display panel and a touch panel. For example, the display panel is configured by a LCD (liquid crystal display) panel or an organic EL (electroluminescence) display panel of a dot matrix type. The touch panel is configured by a resistance film type or electrostatic capacitance type contact position sensor and the like. The display panel and the touch panel may be separate hardware or an integrated unit. The display and input unit 5 displays arbitrary information (for example, icons, web pages, mails and the like). Further, when touched by a user, the display and input unit 5 identifies the touch position based on the output signal of the touch panel.

The operation unit 8 includes a plurality of operation buttons that are used to input various instructions according to user operation. The operation unit 8 includes a zoom-in button 8a for instructing enlargement of the size of displayed characters and a zoom-out button 8b for instructing reduction of the size of displayed characters.

The voice input unit 10 inputs a speech voice.

The speaker for voice call 91 outputs received voice.

The speaker 92 outputs an incoming-call ringtone and the like.

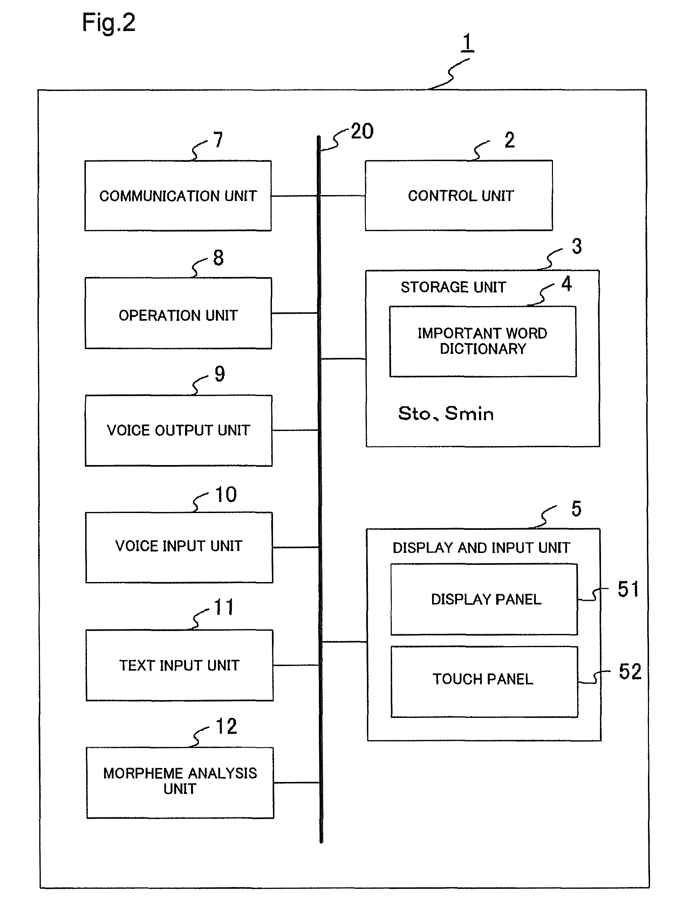

Next, the circuit structure of the information processing device 1 will be described. As illustrated in Fig. 2, the information processing device 1 includes a control unit 2, a storage unit 3, a display and input unit 5, a communication unit 7, an operation unit 8, voice output unit 9, a voice input unit 10, a text input unit 11, a morpheme analysis unit 12, and a bus 20.

The display and input unit 5 is configured by a touch panel display as described above, including a display panel 51, a touch panel 52, a display controller, a touch panel controller, and the like. The display panel 51 displays an image represented by an image signal from the display controller. The display controller outputs the image signal to the display panel 51 and controls the display panel 51 in accordance with the control of the control unit 2. The touch panel 52, when touched by a user, outputs a signal corresponding to the touched position to the touch panel controller. The touch panel controller controls the touch panel 52 as well as outputs touch event information based on the output signal of the touch panel 52. This touch event information includes the coordinates that indicate the touched position, time, event classification, panel number, and the like.

The operation unit 8, as described above, includes a plurality of buttons including a zoom-in button 8a and a zoom-out button 8b, and provides the control unit 2 with an operation signal corresponding to user operation.

The control unit 2 is configured by a microprocessor unit and the like and controls the entire operation (operation of the respective units) of the information processing device 1. For example, the control unit 2 executes various application programs that are stored in the storage unit 3. The application programs include, for example, a text input editing program, an Internet browser, a mailer, and the like. Further, the control unit 2, using the touch event information that is output from the touch panel controller of the display and input unit 5, identifies input information and controls the applications according to the input information. Further, the control unit 2 also performs a control of notifying the executing applications of the touch event information. Furthermore, the control unit 2 causes the display panel 51 to display a variety of data (icons of applications, web pages, mail screens, and the like) via the display controller of the display and input unit 5. The control unit 2 enlarges or reduces the sizes of characters displayed on the display panel 51 in response to the operation of the zoom-in button 8a or zoom-out button 8b of the operation unit 8.

The storage unit 3 is configured by a storage device, such as a random-access memory (RAM), a read-only memory (ROM), or an auxiliary storage, and stores a variety of application programs (for example, the above text input editing program, Internet browser, mailer, and the like) and a variety of data. Further, the storage unit 3 also functions as a work area of the control unit 2. The storage unit 3 may be configured by at least one of an internal memory of the information processing device 1 and a removable external memory. Further, part of the functions of the storage unit 3 may be provided outside of the information processing device 1, as long as the functions can be accessed by the control unit 2.

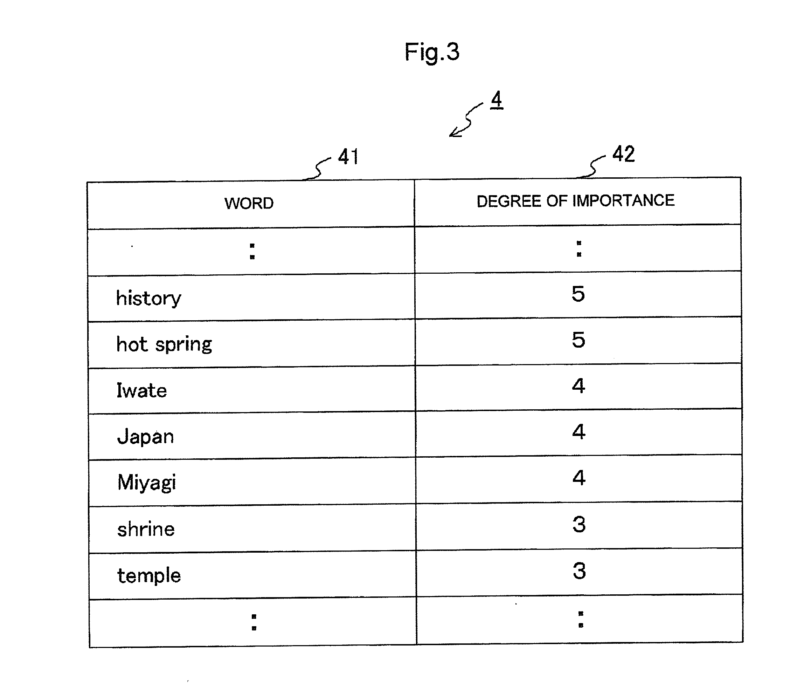

The storage unit 3 stores an important word dictionary 4. The important word dictionary 4 is a dictionary that lists words that have significant meanings (hereinafter, appropriately referred to as important words) and includes a word area 41 and an degree of importance area 42 as exemplified in Fig. 3. The word area 41 registers words (in this example, the words include idioms, phrases, sentences, and the like). The degree of importance area 42 registers degrees of importance that indicate the degrees of significance of corresponding words. The degrees of importance are expressed by, for example, numbers from 1 to 5. The words and degrees of importance can be respectively set or edited via the display and input unit 5. In the example of Fig. 3, "history", "hot spring", "Iwate", "Japan", "Miyagi", "shrine", "temple" and the like are registered in the word area 41. The corresponding degrees of importance "5", "5", "4", "4", "4", "3", "3" are set in the degree of importance area 42.

Further, as illustrated in Fig. 2, the storage unit 3 stores parameters such as a character size Sto that is used in the character size change processing as will be described later and a minimum character size Smin that indicates the minimum value of the display sizes of important words. It should be noted that the minimum character size Smin is the smallest value of the display character sizes of the words registered in the important word dictionary 4 and is usually different from the minimum size of characters that can be displayed on the display panel 51.

The communication unit 7 transmits and receives a speech voice, a variety of data and the like via a base station. Further, the communication unit 7 transmits and receives a variety of data and the like to and from other apparatuses, such as a personal computer and a portable telephone, via a wireless LAN (Local Area Network), an infrared communication, or the like. Further, the communication unit 7 may transmit and receive a variety of data and the like to and from a storage device or other information apparatuses via a cable or the like using a method such as USB (Universal Serial Bus).

The voice output unit 9 includes the above-described speaker for voice call 91, speaker 92, and a DAC (Digital Analog Converter). During a voice call, the voice output unit 9 performs a digital to analog conversion of speech voice signals output by the communication unit 7 by the DAC and emits a sound from the speaker for voice call 91. Further, the voice output unit 9 performs a digital to analog conversion of a ringtone reproduced by the control unit 2 and voice signals of a content and the like by the DAC and emits a sound from the speaker 92.

The voice input unit 10 includes a microphone and, during a voice call or the like, converts voice into voice signals to supply the voice signals to the communication unit 7. The voice input unit 10 also supplies the voice signal to the control unit 2 for voice recognition, a search, and the like.

The text input unit 11 is an interface for a user to input texts. The text input unit 11 may be provided separately from the display and input device 5. Alternatively, the text input unit 11 may be realized by repeating the processing in which an application for inputting a text executed by the control unit 2 displays a software keyboard on the display panel 51 and identifies characters designated by operating the touch panel 52.

The morpheme analysis unit 12 analyzes the morphemes of a document as a display object and disassembles the document into rows of morphemes. The morpheme analysis unit 12 is realized by the control unit 2 executing a morpheme analysis program. The morpheme analysis unit 12 includes an independent word table that lists independent words and an idiom table that lists idioms for morpheme analysis.

The bus 20 passes data transmitted one another among the respective units.

Next, operation of the information processing device 1 that has the above configuration will be described.

The information processing device 1 can perform a variety of basic operations as with general smartphones. For example, the information processing device 1 enables a voice call with other telephone devices. Further, the information processing device 1 accesses an arbitrary site via the communication unit 7, downloads a web page, and displays the web page on the display panel 51. Further, the information processing device 1 creates and edits an arbitrary electronic mail in response to operation of the text input unit 11, and displays the electronic mail in the middle of writing and after writing on the display panel 51. Further, the information processing device 1 transmits the created electronic mail to an arbitrary mail address via the communication unit 7. Further, the information processing device 1 receives electronic mails that are addressed to itself from other communication devices via the communication unit 7 and displays the electronic mails on the display panel 51.

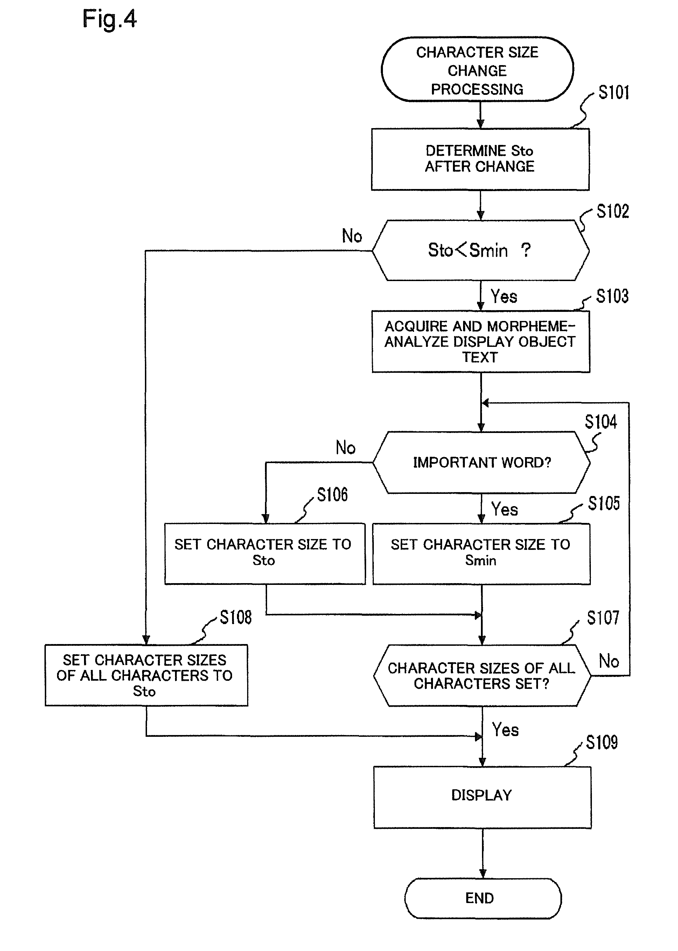

A user can operate the zoom-in button 8a and the zoom-out button 8b to instruct enlargement and reduction of the characters displayed on the display panel 51. The control unit 2 executes character size change processing that is characteristic to the invention in response to the instruction. This character size change processing will be described with reference to the flowchart of Fig. 4.

When receiving designation for changing character sizes from the operation unit 8, the control unit 2 starts the character size change processing illustrated in the flowchart of Fig. 4 and identifies the character size Sto after the change (step S101). More specifically, when receiving an operation signal that instructs enlargement of characters, the control unit 2 changes the character size Sto one step larger than the former size. However, the size Sto is not changed when it is at the maximum value. When receiving an operation signal that instructs reduction of characters, the control unit 2 changes the character size Sto one step smaller than the former size. However, the character size Sto is not changed when it is at the minimum value.

Next, the control unit 2 compares the character size Sto and the minimum character size Smin that is stored in the storage unit 3 (step S102). As described above, the minimum character size Smin is the minimum value of character sizes for displaying important words stored in the important word dictionary 4.

When the control unit 2 determines that the character size Sto is smaller than the minimum character size Smin (step S102; Yes), the control unit 2 acquires a text which is a display object if it is assumed that all the characters are to be displayed in the character size Sto on the display and input unit 5, and morpheme-analyzes the acquired text by the morpheme analysis unit 12 (step S103).

The morpheme analysis unit 12 divides the sentences into morphemes (the smallest linguistic units that can carry a meaning) and determines the respective parts of speech thereof.

As for the details of the morpheme analysis, the independent word table and idiom table are used to match sentences as an analysis object with independent words and idioms to extract words. Next, the parts of speech to which the extracted words belong are searched in the dictionary. Then, if the parts of speech of the obtained words are arranged in a grammatically correct order, the extracted words are also determined as correct. In this way, the morpheme analysis unit 12 divides sentences into characters or character strings and outputs the characters or character strings.

It should be noted that with a language that places spaces in between words, such as English, spaces may be used as a criteria for identifying words. If punctuation marks are included, the punctuation marks are also used in the morpheme analysis.

Next, the control unit 2 determines whether or not the "word" identified by the morpheme analysis unit 12 matches with any of the words registered in the word area 41 of the important word dictionary 4 in units of words (step S104). When the control unit 2 determines that the "word" is the important word listed in the important word dictionary 4 (step S104; Yes), the character size of the word in the display object document is set to the minimum character size Smin (step S105). On the other hand, when the control unit 2 determines that the "word" is not listed in the important word dictionary 4, that is, not an important word (step S104; No), the size of the characters that constitute the word in the display object document is set to the character size Sto determined at step S101 (step S106).

After the processing of steps S105 and S106, the control unit 2 determines whether or not the character sizes are set for all the words (step S107). When the control unit 2 determines that there is a word of which character size remains unset (step S107; No), the control returns to step S104 to repeat the same determination processing. As such, when the character sizes (Smin or Sto) are set for all the words in the display object document, it is determined as YES at step S107.

On the other hand, when the control unit 2 determines that the character size Sto is larger than the minimum character size Smin at step S102 (S102; No), the sizes of all the characters in the display object document are set to Sto (step S108).

Subsequently, the control unit 2 notifies the display controller of the display and input unit 5 of the display object document and the size of each character. The display controller displays each character in the display object document in the specified character size (step S109).

In this way, when instruction for displaying characters in a size smaller than the preset minimum character size Smin is input, the control unit 2 displays the important words in the display object document in the minimum character size Smin and displays characters other than the important words in the specified character size Sto.

As such, upon operation of the zoom-out button 8b, the size of each character becomes smaller, thereby increasing the number of characters (information amount) that can be displayed at a time. Whereas, even when the specified character size Sto is smaller than the minimum character size Smin, the important words are displayed in the minimum character size Smin.

According to the first exemplary embodiment, even when character sizes are reduced to increase the information amount that can be displayed at a time, the character sizes of words other than the important words are displayed smaller, whereby a user can easily visually recognize important words. Thus, the amount of information that can be displayed at a time can be increased without harming visibility.

Next, the above-described operation will be described based on a specific example.

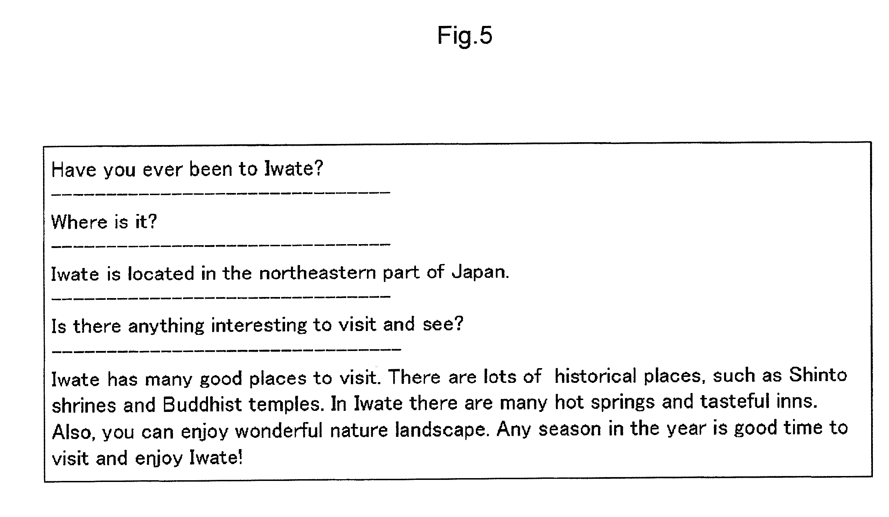

Fig. 5 illustrates an example of a screen that displays entries by a plurality of users in a list. In this case, Iwate prefecture of Japan is talked about.

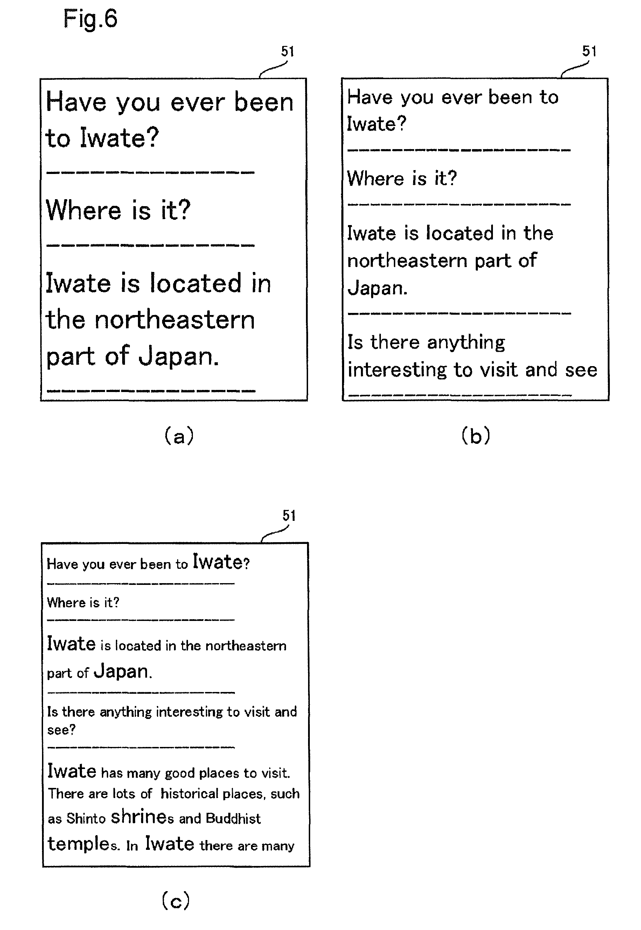

Fig. 6(a) illustrates an example of a screen in which the sentence illustrated in Fig. 5 is displayed in a normal-display character size on the display panel 51. In this condition, suppose a user operates the zoom-out button 8b to instruct reduction of the character size. In such a case, if Sto ≥ Smin is satisfied, it is determined as No at step S102. Then, as illustrated in Fig. 6(b), characters in a small size (character size Sto that is set at step S108) as a whole are displayed on the display panel 51 (S109). In this way, a lot of entries are displayed at a time, thereby increasing perspicuity.

Further, operation of reducing the size of the characters is performed and if Sto < Smin is then satisfied, it is determined as Yes at step S102. The text as a display object is morpheme-analyzed (step S103); whether or not each word is an important word is determined (step S104); and the size of characters that constitute words registered in the important word dictionary 4, such as "Iwate", "Japan", "hot spring", "shrine", "temple", is set to Smin (step S105), while the character size of the other words is set to Sto (step S105). Then, the text is displayed in the set character sizes as illustrated in Fig. 6(c) (step S109). By displaying in such a manner, a larger number of entries can be displayed as well as important words are displayed in easily viewable manner.

It should be noted that the present invention is not limited to the above exemplary embodiment.

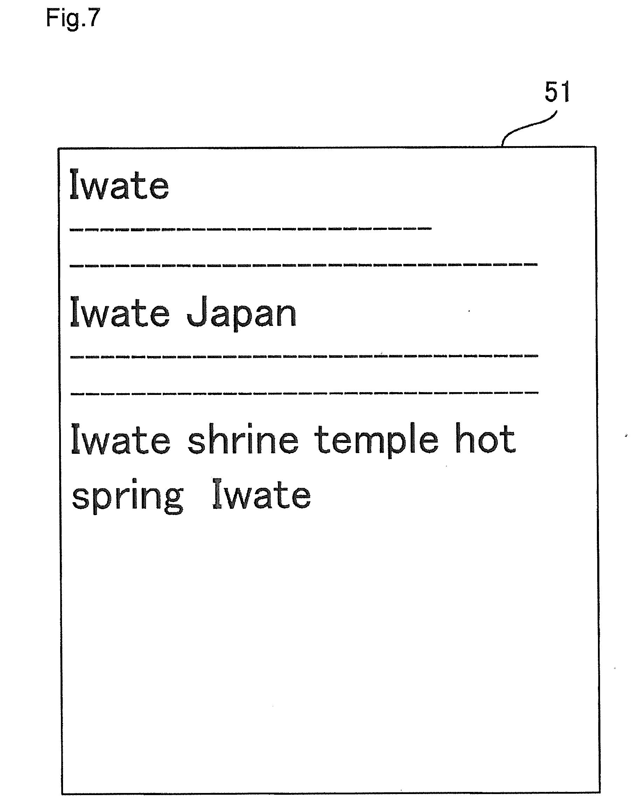

For example, if, in a condition where the text of Fig. 6(c) is displayed, reduction of the character size is further instructed (reduction of the character size is further instructed when the character size Sto is the minimum value), the text as illustrated in Fig. 7 may be displayed. In this case, characters other than the important words are not displayed. As such, the tendency of entries regarding only the important words is understood, which increases usability for a user.

Further, the character sizes of important words may vary depending on the degree of importances of the important words.

In such a case, for example, when the minimum character sizes of words that have degree of importances 5 to 1 (5 is of higher importance) are set to Smin5 to Smin1 (Smin5 > Smin1), when it is determined as Sto < Smin5 at step S102, the character sizes are set according to Sto and Smin of the focused words at step S105. For example, when Sto = Smin3 is satisfied, sizes Smin5, Smin4 are set for words with degree of importances 5, 4 at step S105, while Sto = Smin3 is set for words with degree of importances 3 to 1 and the other words. As such, important words are more prominently displayed, thereby further improving visibility and usability.

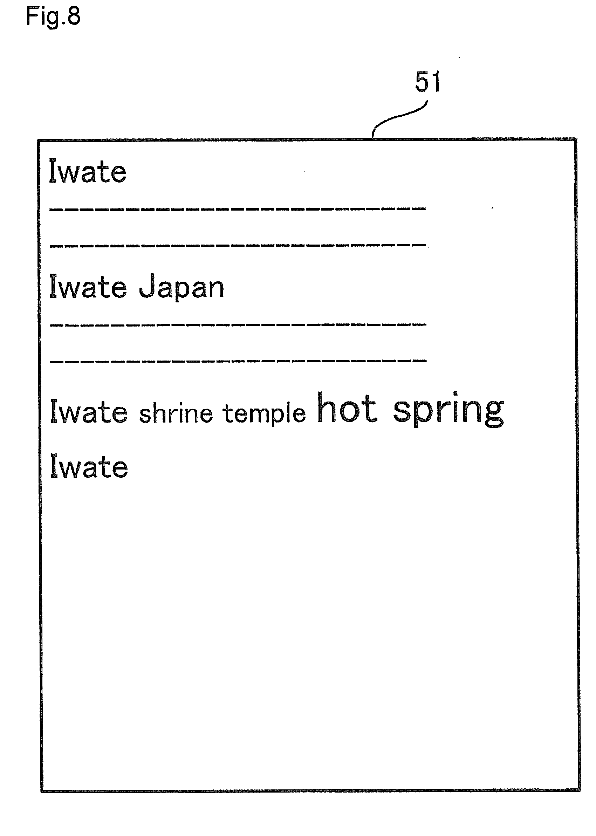

Fig. 8 illustrates a display example of a case where Sto < displayable minimum character size < Smin1 is satisfied

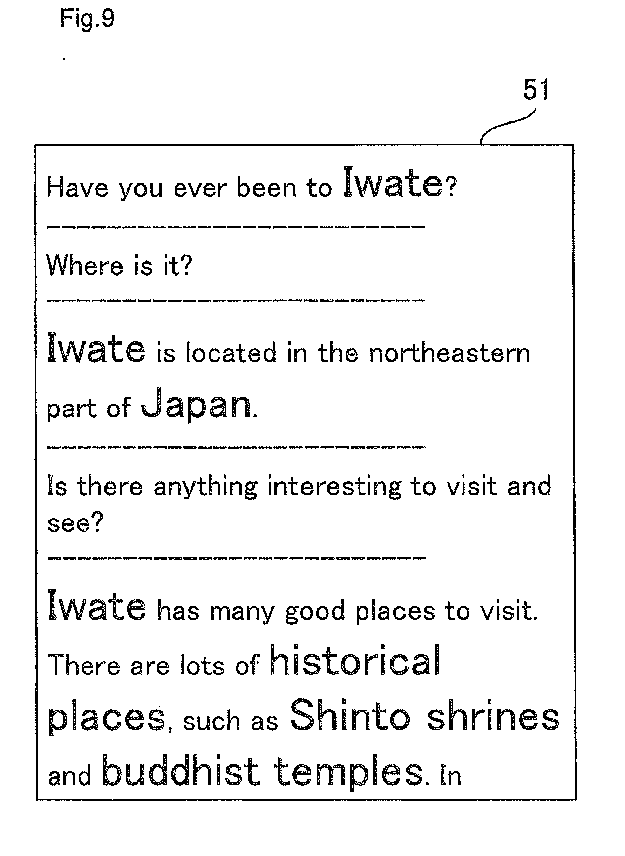

Further, while in the above exemplary embodiment, whether or not the words in the display object document match with the important words registered in the important word dictionary 4 is determined and, according to the result thereof, the sizes of the characters that constitute the words are controlled, the determination may also be made by whether or not the words substantially match with the words in the dictionary. For example, in the examples of Fig. 6(a)-(c), "historical place" is not deemed as matching with the important words. However, in consideration of the inflection, parts of speech, meanings and other factors of words, the important word "history" may be determined as substantially matching with "historical place" at step S104. Further, at the stage of morpheme analysis, a character string that is determined as forming a single meaning, for example, "Shinto" and "Shrine" and "Buddhist" and "temple" that respectively configure "Shinto shrine" and "Buddhist temple" may be displayed in the same size. Further, a plural form of a word and a singular form thereof may be determined as matching. Fig. 9 illustrates a display example of a case where such a control is performed.

In the above exemplary embodiment, important words are identified based on a rule of whether or not the words in the display object document are registered in the important word dictionary 4. Arbitrary method (rule) may be used for identifying the important words in the display object document. For example, synonyms, equivalents, antonyms of words registered in the important word dictionary 4 may be deemed as important words for processing.

Further, for example, a rule may be set in advance among a plurality of words, and the minimum display size Smin may be set for words that fall under the rule. For example, in a series of N-number of words, if there are two words that correspond to antonyms registered in a predetermined antonym dictionary, Smin may be set for both words. Likewise, for example, in a series of N-number of words, if there are a plurality of words that correspond to equivalents registered in a predetermined equivalent dictionary, Smin may be set for these words.

Further, whereas the description has been made in units of "words", an arbitrary character string other than words may be used to determine whether or not the display sizes of characters that constitute the character string are set to the minimum display size Smin. Furthermore, as with the rule for identifying important words, an arbitrary rule (method) may be used for identifying "character strings".

### (Variation)

An arbitrary method may be used for specifying a change of the character sizes. For example, the character sizes may be changed by operation of the touch panel 52. Using the touch panel 52 makes a change of the character sizes faster than a change through operation of the operation unit 8. In particular, by simultaneously touching with a plurality of fingers (multi-touch operation), the character sizes can be intuitively and easily changed.

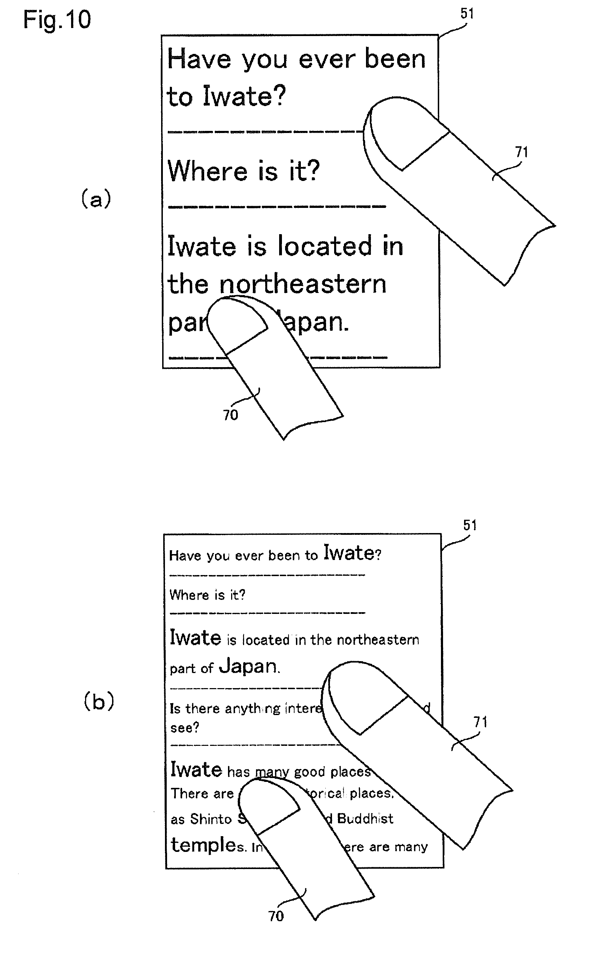

Fig. 10(a), (b) is a diagram illustrating a case where character sizes are changed by multi-touch operation. First, as illustrated in Fig. 10(a), a user touches the touch panel 52 with a thumb 70 and a forefinger 71. Then, the display and input unit 5 outputs touch event information corresponding to each touch to the control unit 2. The control unit 2 analyzes the touch event information and acquires the touched positions and the like. At this time, a distance D1 between two touch positions is calculated and stored in the storage unit 3. It should be noted that the distance between the two points is calculated using the coordinates of the touch positions. For example, the distance between a point (X, Y) and a point (X', Y') is calculated by {(X-X')^2 + (Y-Y')^2}^(1/2).

Next, the user moves fingers to make the thumb 70 and the forefinger 71 closer as illustrated in Fig. 10(b). The control unit 2 calculates a distance D2 between two new points using touch event information that is output at the time. Then, the control unit 2 compares the distance D2 with the former distance D1 to calculate the ratio thereof. The control unit 2 determines the character size in accordance with the ratio. For example, if the ratio D2/D1 of the distance D1 between the former two points and the distance D2 between the two new points is 0.3, the updated character size Sto is the former character size Sto x 0.3. Then, event information that sets the character size Sto close to a parameter is input to the control unit 2.

The processing thereafter is performed in accordance with the processing after step S102 of Fig. 4, whereby the character sizes are changed. In this case, the touch panel 52 operates as means for designating a change of character sizes.

### (Second Exemplary Embodiment)

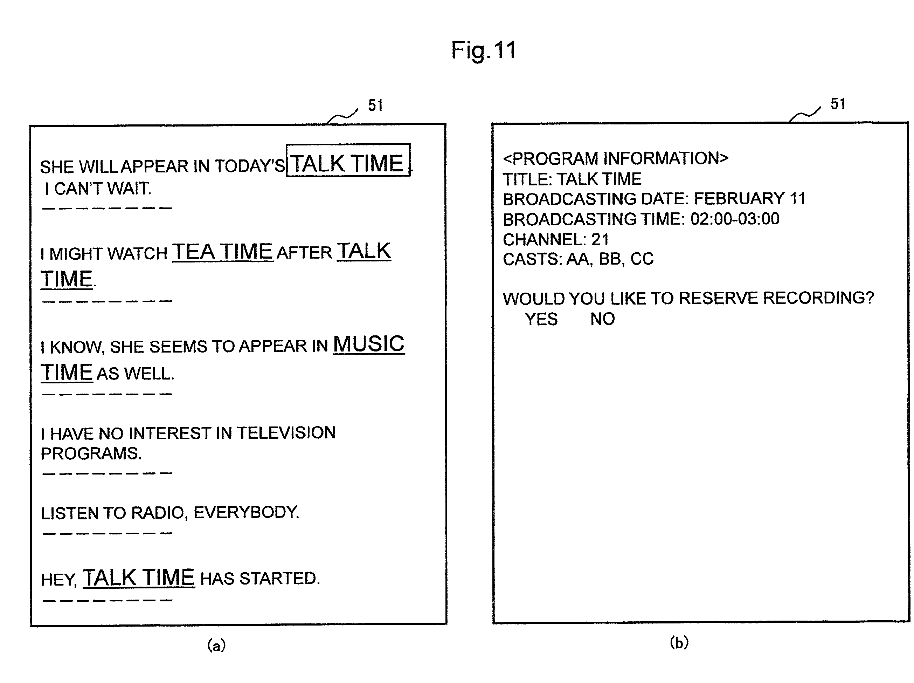

The following will describe the information processing device according to the second exemplary embodiment of the present invention. When sentences relating to a television program (or a radio program) are displayed, the information processing device 1 according to the second exemplary embodiment displays a program title included in the sentences with large characters. When the program title is selected through key operation, touch operation, or the like, the information processing device 1 displays program information of the program. For example, if the title of a program "talk time" in the displayed document is selected by a user as illustrated in Fig. 11(a), program information relating to the program "talk time", such as start time and end time, is displayed as illustrated in Fig. 11(b).

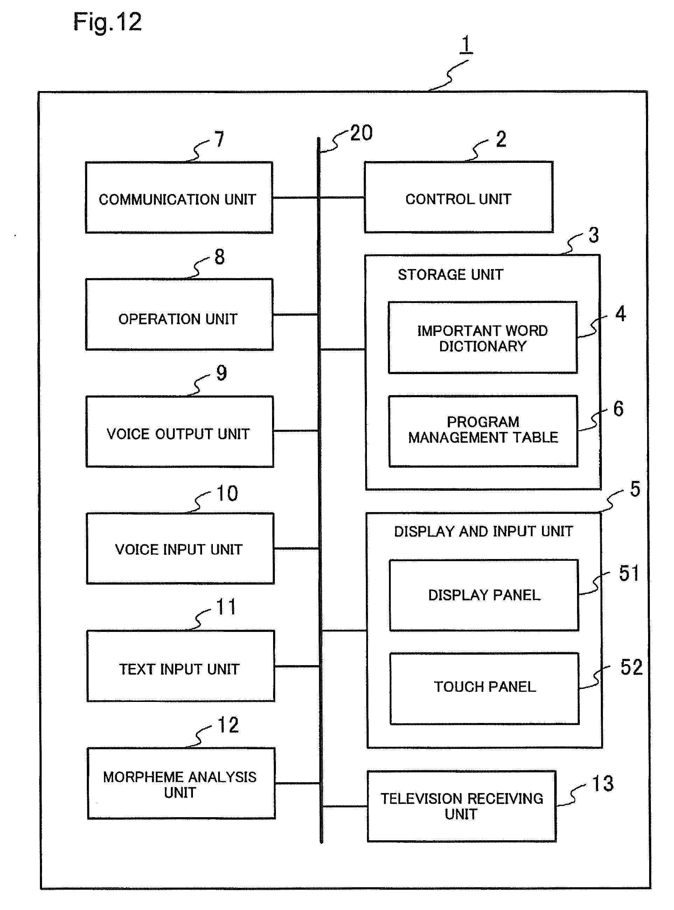

Fig. 12 is a diagram illustrating a configuration of the information processing device 1 according to the second exemplary embodiment. The information processing device 1 includes a program management table 6 and a television receiving unit 13 in addition to the components illustrated in Fig. 1.

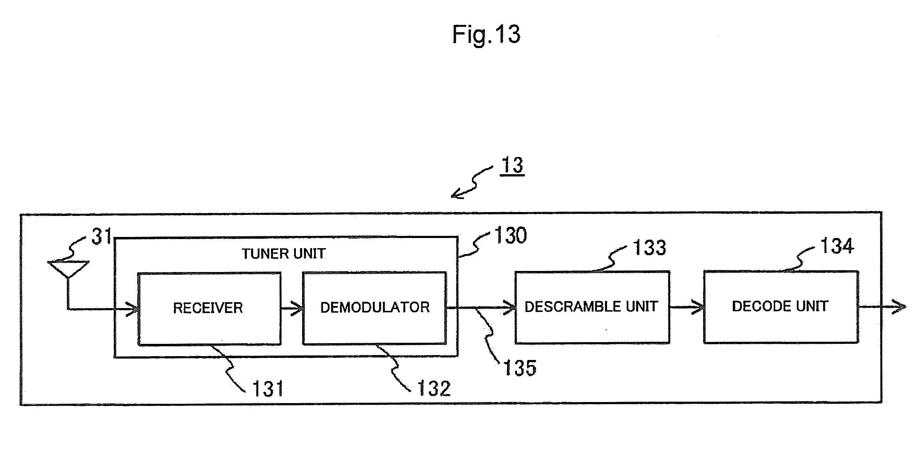

The television receiving unit 13, as illustrated in Fig. 13, includes an antenna unit 31, a tuner unit 130, a descramble unit 133, and a decode unit 134.

The antenna unit 31 has a shape that is necessary to receive broadcast waves, such as UHF band radio waves and VHF band radio waves.

The tuner unit 130 demodulates, for example, a Transport Stream (TS) of terrestrial digital broadcast from the radio waves that are received via the antenna unit 31 and outputs the demodulated signal TS to the descramble unit 133. The tuner unit 130 includes a receiver 131 and a demodulator 132 and outputs a TS (Transport Stream) signal 135.

The receiver 131 takes out a specified signal (for example, a signal of a predetermined frequency bandwidth corresponding to a broadcast of a channel specified by a user) as an RF (Radio Frequency) signal from the radio waves input through the antenna unit 31 and outputs the taken out signal to the demodulator 132.

The RF signal output by the receiver 131 is input to the demodulator 132. The demodulator 132 demodulates the input RF signal to TS and outputs the TS signal 135. The descramble unit 133 deciphers the scrambled TS output by the tuner unit 130, converts the data to a plaintext, and outputs the plaintext to the decode unit 134. The decode unit 134 divides and decodes the plaintext TS output by the descramble unit 133 and outputs video data, voice data, caption data, program information, and the like.

It should be noted that the television receiving unit 13 may receive IP (Internet Protocol) broadcasts via the communication unit 7. The IP broadcast is a broadcasting service utilizing the Internet protocol where a video or a voice is acquired from the IP network for viewing.

The program management table 6 stored in the storage unit 3 is created by the control unit 2, for example, based on an electronic program guide (EPG) that the television receiving unit 13 receives and outputs. Further, the electronic program guide may be acquired from a dedicated server through the Internet connection via the communication unit 7.

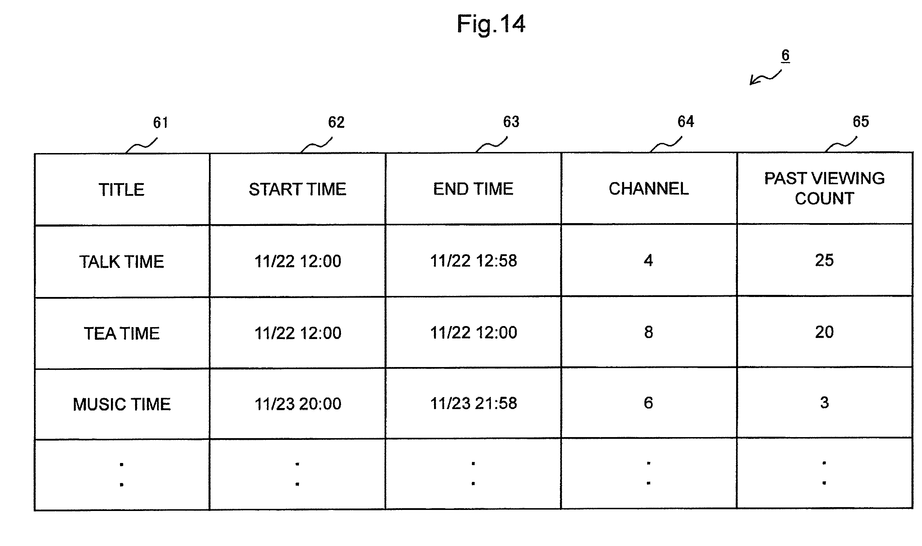

Fig. 14 is a diagram illustrating a configuration of the program management table 6 that is generated by the control unit 2. The program management table 6 includes an area indicating a title 61, an area indicating start time 62, an area indicating end time 63, an area indicating a channel 64, an area indicating a past viewing count 65, and the like.

The title indicates the name of a program. The title may be an identification code of a program. The start time is time when the broadcasting of the program starts, and the end time is time when the broadcasting of the program ends. The channel indicates a channel on which the program is broadcasted. The past viewing count indicates, for example, if the program is a weekly broadcasted program, the number of times the program is viewed by a user. When the program is viewed by a user, the control unit 2 increments the value of the past viewing count by one.

Further, the words of the important word dictionary 4 may be determined using the title in the program management table 6. Furthermore, the degrees of importance of the important word dictionary 4 may be determined using the value of the past viewing count in the program management table 6. For example, if the past viewing count is 20 times or more, the control unit 2 registers the title in the important word dictionary 4 and sets the degree of importance as 4, while, if the past viewing count is 25 times or more, the control unit 2 sets the degree of importance as 5.

As such, the title of the program that a user frequently views can be automatically registered as an important word. As a result, the user can easily find sentences written about the program on the Internet and the like, thereby improving usability.

The following will describe processing of displaying the corresponding program information when a program name in a display object document is selected in the information processing device 1 according to the second exemplary embodiment. First, if "talk time" as the title name of the program is selected by a user, the program management table 6 is referred to. Then, a line whose title is "talk time" is searched from the program management table 6. If "talk time" is found as the result of searching, the start time, end time and the like are acquired. Then, the acquired program information is displayed on the display and input unit 5.

It should be noted that, while a portable telephone is exemplified in the exemplary embodiments of the present invention, the invention may also apply to terminals with display means, such as personal handyphone systems (PHS) and personal computers, without limitation to portable telephones.

While character sizes are changed in units of words in the above exemplary embodiments, the character sizes may also be changed in units of arbitrary character strings or symbol strings. Further, the character sizes may be changed in units of arbitrary phrases and sentences.

The whole or part of the exemplary embodiments disclosed above can be described as, but not limited to, the following supplementary notes.

### (Supplementary Note 1)

An information processing device including: a display unit that displays characters; a character size designation unit that designates a size of the characters to be displayed on the display unit; a display control unit that causes the display unit to display the characters in a display object document in a manner such that, when the size designated by the character size designation unit is smaller than a predetermined size, characters in a character string that falls under a predefined rule are displayed in the predetermined size and other characters are displayed in the size designated by the character size designation unit.

### (Supplementary Note 2)

The information processing device according to Supplementary Note 1 further including a dictionary that lists predetermined character strings, wherein the display control unit causes the display unit to display the characters in the display object document in a manner such that, when the size designated by the character size designation unit is smaller than a predetermined size, characters in a character string that substantially matches with a character string that is registered in the dictionary are displayed in the predetermined size.

### (Supplementary Note 3)

The information processing device according to Supplementary Note 2, wherein the dictionary includes information that indicates degrees of importance of the predetermined character strings, and the display control unit determines sizes of characters in the predetermined character strings to be displayed on the display unit according to the information that indicates the degrees of importance.

### (Supplementary Note 4)

The information processing device according to Supplementary Note 2 or 3 including: a television receiving unit that receives and decodes a television signal; and a program management table that lists a program title that represents a name of a program, a viewing count of the program, and program information relating to the program, wherein the display control unit controls so as to define the program title listed in the program management table as the predetermined character string, determine information that indicates the degree of importance of the predetermined character string using the viewing count of the program indicated by the program title, and update the information listed in the dictionary.

### (Supplementary Note 5)

The information processing device according to Supplementary Note 4, wherein the display control unit controls the display unit in a manner such that, when a character string that matches with the program title listed in the program management table is selected from the characters in the display object document, the program information relating to the program title is displayed.

### (Supplementary Note 6)

The information processing device according to any one of Supplementary Notes 1 to 5, wherein the display unit includes a touch panel unit that outputs touch event information and the character size designation unit determines a size of characters to be displayed on the display unit using a distance between two points that is calculated from touch position coordinates included in the touch event information output by the touch panel unit.

### (Supplementary Note 7)

A display control method including: receiving a designation for specifying a size of characters to be displayed; causing a display unit to display the characters in a display object document in a manner such that, when the designated character size is smaller than a predetermined size, characters in a character string that falls under a predefined rule are displayed in a size larger than the specified size and other characters are displayed in the designated size.

### (Supplementary Note 8)

A computer readable storage medium that stores a program that causes a computer to operate to: receive a designation that specifies a size of characters to be displayed; and cause a display unit to display the characters in a display object document in a manner such that, when the designated character size is smaller than a predetermined size, characters in a character string that falls under a predefined rule are displayed in a size larger than the specified size and other characters are displayed in the designated size.

The present invention can be applied to a variety of exemplary embodiments and modifications without departing from the broad sense of the spirit and scope of the present invention. Further, the above-described exemplary embodiments are for description of the present invention without restricting the scope of the present invention. In other words, the scope of the present invention is specified not by the exemplary embodiments but by the scope of the claims. Thus, a variety of modifications that are implemented within the scope of the claims as well as within the scope of the significance of the equivalent invention are considered as within the scope of the present invention.

The present invention is based on Japanese Patent Application No 2011-76777 that was filed as of March 30, 2011. The description, claims, and drawings of Japanese Patent Application No 2011-76777 are incorporated herein in its entirety by reference.

### [Reference signs List]

- 1: Information processing device
- 2: Control unit
- 3: Storage unit
- 4: Important word dictionary
- 41: Word area
- 42: Degree of importance area
- 5: Display and input unit
- 51: Display panel
- 52: Touch panel
- 6: Program management table
- 61: Area indicating title
- 62: Area indicating start time
- 63: Area indicating end time
- 64: Area indicating channel
- 65: Area indicating past viewing count
- 7: Communication unit
- 8: Operation unit
- 8a: Zoom-in button
- 8b: Zoom-out button
- 9: Voice output unit
- 91: Speaker for voice call
- 92: Speaker
- 10: Voice input unit
- 11: Text input unit
- 12: Morpheme analysis unit
- 13: Television receiving unit
- 130: Tuner unit
- 131: Receiver
- 132: Demodulator
- 133: Descramble unit
- 134: Decode unit
- 135: Signal
- 31: Antenna unit
- 20: Bus
- 70: Thumb
- 71: Forefinger

## Claims

1. An information processing device comprising:
a display unit that displays characters;
a character size designation unit that designates a size of the characters to be displayed on the display unit;
a display control unit that causes the display unit to display the characters in a display object document in a manner such that, when the size designated by the character size designation unit is smaller than a predetermined size, characters in a character string that falls under a predefined rule are displayed in the predetermined size and other characters are displayed in the size designated by the character size designation unit.

2. The information processing device according to Claim 1 further comprising a dictionary that lists predetermined character strings, wherein
the display control unit causes the display unit to display the characters in the display object document in a manner such that, when the size designated by the character size designation unit is smaller than a predetermined size, characters in a character string that substantially matches with a character string that is registered in the dictionary are displayed in the predetermined size.

3. The information processing device according to Claim 2, wherein
the dictionary includes information that indicates degrees of importance of the predetermined character strings, and
the display control unit determines a size of the characters in the predetermined character strings to be displayed on the display unit according to the information that indicates the degrees of importance.

4. The information processing device according to Claim 2 or 3 comprising:
a television receiving unit that receives and decodes a television signal; and
a program management table that lists a program title that represents a name of a program, a viewing count of the program, and program information relating to the program, wherein
the display control unit controls so as to
define the program title listed in the program management table as the predetermined character string,
determine information that indicates the degree of importance of the predetermined character string using the viewing count of the program indicated by the program title and update the information listed in the dictionary.

5. The information processing device according to Claim 4, wherein
the display control unit controls in a manner such that, when a character string that matches with the program title listed in the program management table is selected from the characters in the display object document, the program information relating to the program title is displayed on the display unit.

6. The information processing device according to any one of Claims 1 to 5, wherein
the display unit comprises a touch panel unit that outputs touch event information and
the character size designation unit determines a size of the characters displayed on the display unit using a distance between two points that is calculated from touch position coordinates included in the touch event information output by the touch panel unit.

7. A display control method comprising:
receiving a designation for specifying a size of characters to be displayed; and
causing a display unit to display the characters in a display object document in a manner such that, when the designated character size is smaller than a predetermined size, characters in a character string that falls under a predefined rule are displayed in a size larger than the specified size and other characters are displayed in the designated size.

8. A computer readable recording medium that stores a program that causes a computer to operate to:
receive a designation that specifies a size of characters to be displayed; and
cause a display unit to display the characters in a display object document in a manner such that, when the designated character size is smaller than a predetermined size, characters in a character string that falls under a predefined rule are displayed in a size larger than the specified size and other characters are displayed in the designated size.
